# EUROPEAN PATENT SPECIFICATION

(11) **EP 3 761 813 B1**
(45) Date of publication and mention of the grant of the patent: **14.02.2024**
(21) Application number: 19707763.9
(22) Date of filing: 25.02.2019
(51) Int. Cl.: A24D 3/17, A24D 3/04, A24D 3/02

(54) **AEROSOL GENERATING ARTICLES**
AEROSOLERZEUGUNGSARTIKEL
ARTICLES DE GÉNÉRATION D'AÉROSOL

(30) Priority: 08.03.2018 EP 18160821
(43) Date of publication of application: 13.01.2021
(73) Proprietor: Philip Morris Products S.A., 2000 Neuchâtel (CH)
(72) Inventor: BATISTA, Rui Nuno, 2000 Neuchatel (CH); FERRARI, Eva, 40069 Bologna (IT); JORDIL, Yves, 2000 Neuchatel (CH); TRITZ, Poh Yoke, 2000 Neuchatel (CH)
(74) Representative: HGF
(86) International application number: PCT/EP2019/054533
(87) International publication number: WO 2019/170449

(56) References cited:
- EP-A1- 1 093 728
- US-A- 3 189 506
- US-A- 3 238 951
- US-A- 3 994 306
- US-A- 4 357 379
- US-A1- 2017 042 221

## Description

This invention relates generally to aerosol generating articles. More specifically, although not exclusively, this invention relates aerosol permeation elements used in tubular shaped aerosol generating articles including, in particular, such aerosol generating articles configured to heat aerosol forming substrates without burning them. This invention also relates to methods of manufacturing such articles and elements.

The filter part or cooling part of an aerosol generating article performs several functions and, as such, several of its properties must be considered in its design and manufacture. The main role of the filter part is filtration or cooling efficiency, namely its effectiveness in preventing unwanted components of the aerosol to reach the user, but this must always be balanced with the overall resistance to draw, which is the pressure drop experienced as the aerosol passes through the filter. An additional complication with aerosol generating articles configured to heat aerosol forming substrates without burning them is that the quantity of sensory media tends to be more closely packed. As such, the inherent resistance to draw provided by the sensory media in such aerosol generating articles is generally much higher than that of traditional combustible aerosol generating articles.

There are several other requirements of the filter part which result from its interaction with the mouth of a consumer. These include, for example, structural rigidity and resistance to wetting. The filter part of an aerosol generating article can often experience significant compressive forces exerted thereon. Some consumers also enjoy chewing the filter part and often have expectations as to its resistance to compressibility. The structure of the filter part must be able to withstand such forces, whilst both continuing to perform its main function and satisfying expectations. The filter part must also continue to function despite exposure to saliva and should minimise or prevent its transmission therethrough to avoid wetting of the aerosol forming substrate.

These competing requirements, namely effective filtering, minimal resistance to draw, compressibility and resistance to wetting, must all be balanced in the final product. It would therefore be advantageous to provide an aerosol permeation element which provides a balance between these competing factors.

One known method of manufacturing filter parts of aerosol generating articles involves pulling a continuous rod of filter material, for instance cellulose acetate, on a moving band of wrapping paper, which is closed and glued around the rod. The continuous wrapped rod is then cut into lengths or sticks, which are then joined to the rest of the aerosol generating article by a tipping paper, providing the requisite resistance to wetting. The wrapping paper is generally hard for resisting mouth pressure, which makes it difficult to shape. Moreover, it can impact the taste of the aerosol and the gluing process can present challenges.

Another known method of manufacturing filter parts of aerosol generating articles involves the use of a laminated poly lactic acid (PLA) sheet in place of the hard wrapping paper. PLA sheets are more straightforward to shape, resist saliva and air transmission and are biodegradable. However, such sheets still share some of the same disadvantages as wrapping paper.

It would therefore be advantageous to provide an alternative method of manufacturing an aerosol permeation element, preferably one which at least mitigates one or more issues associated with known aerosol generating articles.

US 4357379A discloses a fibrous product in the form of a rod.

US 3189506A discloses rod-like elements useful as filters for tobacco smoke and other purposes.

US 3238951A discloses an apparatus and method of manufacturing, for applying a band to a rod advancing longitudinally along the length of the rod.

The invention is as claimed in the claims.

Accordingly, a first aspect of the invention provides an aerosol permeation element for use in an aerosol generating article, the aerosol permeation element comprising an aerosol permeable core extrusion surrounded by a sleeve comprising predominantly linear, axially oriented fibres.

The provision of a sleeve with linear, axially oriented fibres and an extruded core has been found to provide an advantageous, novel balance between the aforementioned properties.

As used herein, linear and axially oriented fibres refers to a plurality of fibres that are substantially aligned with one another along an axial direction, or aerosol draw direction, of the aerosol permeation element.

The core may comprise a polymeric extrusion, which may be foamed or may have one or more pathways described therealong, or may be both foamed and have one or more pathways described therealong. At least one of the pathways may be described within the core extrusion. Alternatively or in addition, at least one of the pathways may be described by a channel on an outer surface thereof, for example which cooperates with the sleeve. At least one or each pathway may be helical or helicoidal. The core may comprise a poly lactic acid, acetate or cellulose material. The core may comprise one or more drawn clusters of fibres, which may comprise a wrap, for example, a paper or plastic wrap, surrounding the drawn fibres.

The core may comprise a resistance to draw of between 0.3 millimetres, water gauge (mmWG) to 10 millimetres, water gauge (mmWG), preferably between 0.5 millimetres, water gauge (mmWG) and 5 millimetres, water gauge (mmWG), per millimetre of length, for example, axial length, of the aerosol permeation element. Millimetre, water gauge (mmWG) is also known as millimetre of water (mmH2O).

The sleeve comprises two or more longitudinal segments, which are bonded together along longitudinal edges of the segments, for example, along at least the longitudinal edges. The segments may form an integral sleeve, for example the tow material of the longitudinal segments may be bonded or joined together.

At least two or all of the segments may be formed from the same tow. The sleeve, or the tow from which the sleeve is formed, may comprise cellulose acetate or poly lactic acid fibres. The sleeve or the tow from which the sleeve is formed may comprise polypropylene, poly(3-hydroxybutyrate-co- hydroxyvalerate)(PHVB), rayon, viscose or regenerated cellulose fibres. The tow from which the sleeve is formed may comprise a denier per filament (dpf) of between 3.0 dpf to 15.0 dpf and preferably between 5.0 dpf to 10.0 dpf. The tow from which the sleeve is formed may comprise a Y-shaped cross-section.

The segments or the tow from which the segments are formed may, but need not, comprise a plasticiser. The longitudinal segments may be bonded together by an adhesive, such as a polyvinyl alcohol or polyvinyl acetate. Preferably, the core is substantially free of any plasticiser or adhesive. The core may be secured, connected or joined to the sleeve by the plasticiser or adhesive.

The sleeve may comprise a thickness, for example a wall thickness, of between 0.5 millimetres and 3 millimetres, for example between 0.5 millimetres and 1.5 millimetres or between 1 millimetre and 2 millimetres. The core may be between 2 millimetres and 8 millimetres, for example the core may comprise a diameter of between 2 millimetres and 8 millimetres. The core may be between 4 millimetres and 6 millimetres, for example the core may comprise a diameter of between 4 millimetres and 6 millimetres. The aerosol permeation element may be between 3 millimetres and 9 millimetres, for example the aerosol permeation element may comprise a diameter of between 3 millimetres and 9 millimetres. The aerosol permeation element may be between 5 millimetres and 7 millimetres, for example the aerosol permeation element may comprise a diameter of between 3 millimetres and 9 millimetres.

The sleeve may be further wrapped into a wrapper such as paper.

Another aspect of the invention provides an aerosol generating article comprising an aerosol permeation element as described above.

The aerosol generating article may comprise an aerosol generating or sensorial material, for example tobacco. The aerosol generating article may comprise a rod of aerosol generating or sensorial material, which may be connected, secured or attached to the aerosol permeation element. In embodiments, the aerosol generating article comprises a further sleeve within which the aerosol generating or sensorial material is received. The further sleeve may be connected, secured or attached to the aerosol permeation element, for example by tipping paper.

Another aspect of the invention provides a method of manufacturing an aerosol permeation element for use in an aerosol generating article, the method comprising: forming two or more strips into segments surrounding a conveying path; introducing an aerosol permeable core extrusion between the segments; and bringing the segments together to form a sleeve surrounding the core extrusion.

The core extrusion, which may be continuous or foamed or polymeric or any combination thereof, may be introduced between the segments with one or more pathways described therealong. The method may comprise extruding a core material, for example through a core die, to form the core extrusion. The method may comprise introducing the core extrusion between the segments from the core die, for example, directly or via a cooling media or bath. The method may comprise drawing the extruded core material through a cooling media or bath. The extruded core material may be drawn such that it forms a substantially conical shape, for example downstream of the core die or between the core die and the cooling media or bath. Alternatively, the method may comprise supplying the core extrusion as a pre-formed core extrusion. The method may comprise supplying the core extrusion from a delivery device, such as a roll.

The method may comprise bringing the segments together into a sleeve former, for example, to form the sleeve. The method may comprise introducing the aerosol permeable core extrusion between the segments upstream of the sleeve former, for example, such that they are drawn therein or retained or constrained or compressed or any combination thereof, between the segments as they are brought together to form the aerosol permeation element. The method comprises bonding the segments together. The method may comprise causing the tow material of the segments to bond together, such as by applying heat or pressure or heat and pressure, for example within the sleeve former, to form an integral sleeve.

The method comprises separating a tow into the two or more strips, for example, using a tow separating means or separator. For example, the method may comprise passing the tow through or between one or more, for example, a pair or set of, slitting rollers. Additionally or alternatively, the method may comprise passing the strips over a guide, for example towards each other or into the sleeve former (or both towards each other and into the sleeve former), which may be downstream of the guide. The method may comprise passing the strips over the guide and into the sleeve former such that the segments are substantially or at least partially tubular or part-conical, or both at least partially tubular and part-conical, between the guide and the sleeve former. The method may comprise drawing the segments together, for example into the sleeve former.

The method may comprise separating or cutting the formed sleeve and core into a plurality of aerosol permeation elements, for example using an aerosol permeation element separation means or separator, such as a cutting station.

The aerosol generating article may comprise an aerosol generating or sensorial material, for example tobacco. The aerosol generating article may comprise a rod of aerosol generating or sensorial material, which may be connected, secured or attached to the aerosol permeation element. In embodiments, the aerosol generating article comprises a further sleeve within which the aerosol generating or sensorial material is received. The further sleeve may be connected, secured or attached to the aerosol permeation element.

The core delivery means may comprise a core cutting means or station, for example, for receiving and severing a continuous extrusion to form the plurality of cores.

In some embodiments, the core delivery means comprises a supply, for example a roll, of pre-formed core extrusion. The supply may be operatively connected to the core cutting means, for example, for supplying the pre-formed core extrusion to the core cutting means.

Alternatively, the apparatus or core delivery means may comprise a core forming means or former. The core forming means may comprise a core extruder, for example, for forming an extrusion, which may be continuous or may have one or more pathways described therealong or may be both continuous and have one or more pathways described therealong. The core forming means may comprise a core die, which may comprise a female portion or part or one or more male portions or parts, or both female and male portions or parts. The female portion or part may comprise an outer wall, for example, for forming an outer surface of the extrusion. The or each male portion or part may comprise a core, which may be suspended or secured within the female portion. The or each male portion or part may be configured or suitable for forming one of the pathways along the extrusion. The male portion or part may be rotatable, for example within the female part, for example, such that the core members create helical or helicoidal pathways within the extrusion.

The core forming means may comprise a core cooling means, such as a cooling bath that may comprise or contain cooling media therein. The core cooling means may be downstream of the core extruder or core die, or downstream of both the core extruder and core die. The core forming means may comprise a core drawing means, mechanism or device, which may be downstream of the core extruder or core die or core cooling means, or any combination thereof, for drawing the core extrusion. The core forming means may be configured such that the core extrusion is drawn, in use, to form a substantially conical shape, for example downstream of the core die or between the core die and the core cooling means. The core forming means may be configured or operable to vary the speed of rotation of the male part relative to a speed at which the core is drawn, for example, to create a predetermined helical angle of the pathways. The core drawing means, mechanism or device may comprise a pulling device, which may comprise a motor and a conveying means or conveyor for pulling or drawing the sleeve containing cores. The conveying means may comprise one or more, such as a set or pair of, pulling rollers. The core cutting means may be downstream of the core extruder or core die or core drawing means, or any combination thereof.

The sleeve forming means or former may comprise a forming funnel, which may be for receiving and compressing the segments formed by the guide or the core material received by the delivery device, or both the segments formed by the guide and the core material received by the delivery device. The sleeve forming means or former may comprise a tubular element, for example downstream of the forming funnel, for example, for maintaining the formed aerosol permeation element(s) in a compressed state. The apparatus or sleeve forming means may comprise a drawing means, mechanism or device for drawing a length or rod of finished, for example, integral, aerosol permeation elements. The drawing means or mechanism may comprise a pulling device, which may comprise a motor and a conveying means or conveyor for pulling or drawing the length or rod of finished, for example, integral, aerosol permeation elements through and out of the sleeve forming means or former. The conveying means may comprise one or more, such as a set or pair of, pulling rollers.

The apparatus may comprise a tow separating means or separator, for example, for separating a tow into two or more strips. The tow separating means may comprise one or more, for example, a pair or set of, slitting rollers.

The apparatus may comprise an aerosol permeation element separation means or separator. The apparatus or separation means may comprise a cutting means or station, for example, for cutting the formed sleeve and core into a plurality of aerosol permeation elements. The cutting means or station may be downstream of the sleeve forming means or drawing means or both the sleeve forming means and the drawing means. The cutting means may be for separating, cutting or severing a sleeve or core or both sleeve and core exiting the sleeve forming means to form a series of aerosol permeation elements.

For the avoidance of doubt, any of the features described herein apply equally to any aspect of the invention. For example, the aerosol generating article may comprise any one or more features of the aerosol permeation element or series of aerosol permeation elements or vice versa. The method may comprise any one or more features or steps relevant to one or more features of the aerosol permeation element, the series of aerosol permeation elements or aerosol generating article.

In combination with other features, specific embodiments may comprise a computer program element comprising computer readable program code means for causing a processor to execute a procedure to implement one or more steps of the aforementioned method.

In combination with other features, specific embodiments may comprise a computer program element embodied on a computer readable medium.

In combination with other features, specific embodiments may comprise a computer readable medium having a program stored thereon, where the program is arranged to make a computer execute a procedure to implement one or more steps of the aforementioned method.

In combination with other features, specific embodiments may comprise a control means or control system or controller comprising the aforementioned computer program element or computer readable medium.

All scientific and technical terms used herein have meanings commonly used in the art unless otherwise specified. The definitions provided herein are to facilitate understanding of certain terms used frequently herein.

As used herein, the term "aerosol generating article" refers to an article comprising an aerosol forming substrate that is capable of releasing volatile compounds that can form an aerosol, for example by heating, combustion or chemical reaction.

As used herein, the term "aerosol forming substrate" is used to describe a substrate capable of releasing volatile compounds, which can form an aerosol. The aerosols generated from the aerosol forming substrates of aerosol generating articles according to the invention may be visible or invisible and may include vapours (for example, fine particles of substances, which are in the gaseous state, that are ordinarily liquid or solid at room temperature) as well as gases and liquid droplets of condensed vapours.

As used herein, the term "sheet" denotes a laminar element having a width and length greater than the thickness thereof.

As used herein, the term "aerosol permeation element" is used to describe an element that allows permeation of an aerosol through it, partially or fully. Typically, the aerosol permeation element will be, but not limited to, a filter, a spacer or a cooling element. The aerosol permeation element may have a combination of functions.

As used herein, the term "sleeve" is used to describe a partial or full cover. Ideally partially covering the longitudinal outer surface of the core of the aerosol permeation element. The term "core", as used herein, is used to describe the inner portion of the aerosol permeation element at least partially covered by the sleeve of the aerosol permeation element.

The terms "upstream" and "downstream" refer to relative positions of elements of the aerosol generating article described in relation to the direction of inhalation air flow as it is drawn through the body of the aerosol generating article from a distal, tip end to the mouthpiece end. In other words as used herein, "downstream" is defined relative to air flow during use of the smoking article or aerosol generating article, with the mouthpiece end of the article being the downstream end through which air and aerosol is drawn. The end opposite the mouthpiece end is the upstream end.

The words "preferred" and "preferably" refer to embodiments of the invention that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the disclosure, including the claims.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Within the scope of this application it is expressly intended that the various aspects, embodiments, examples and alternatives set out in the preceding paragraphs, in the claims in the description and drawings, and in particular the individual features thereof, may be taken independently or in any combination. That is, all embodiments or features of any embodiment can be combined in any way, unless such features are incompatible. For the avoidance of doubt, the terms "may", "and/or", "e.g.", "for example" and any similar term as used herein should be interpreted as non-limiting such that any feature so-described need not be present. Indeed, any combination of optional features is expressly envisaged without departing from the scope of the invention, whether or not these are expressly claimed.

Embodiments of the invention will now be described by way of example only with reference to the accompanying drawings in which:
Figure 1 is a perspective view of an aerosol permeation element according to an embodiment of the invention;
Figure 2 is a transverse cross-sectional view of the aerosol permeation element of Figure 1;
Figure 3 is a cross-sectional view of the aerosol permeation element of Figures 1 and 2 along its longitudinal axis;
Figure 4 is a cross-sectional view of an aerosol permeation element according to another embodiment of the invention;
Figure 5 is a schematic of a filter manufacturing apparatus according to an embodiment of the invention;
Figure 6 is a schematic of a tow as it is formed into two strips;
Figure 7 is a cross-sectional view through the core die of the apparatus of Figure 5; and
Figure 8 is a schematic of a filter manufacturing apparatus according to another embodiment of the invention.

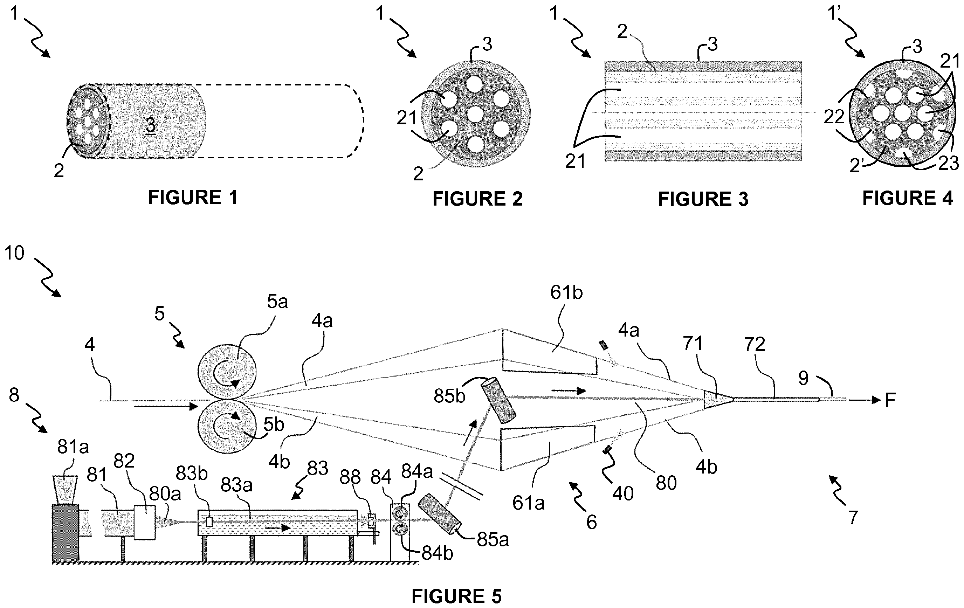

Referring now to Figures 1 to 3 show an aerosol permeation element 1 according to an embodiment of the invention, which is a filter part 1 for an aerosol generating article (shown in outline). The filter part 1 in this embodiment includes an aerosol permeable core 2 of extruded polymeric filter material surrounded by a sleeve 3 of linear, axially oriented fibres. The core 2 has a plurality of pathways 21 described within it, which extend along its axial length. The core 2 is formed from a poly lactic acid (PLA) material in this embodiment and has a diameter D of 5 millimetres. In this embodiment, the sleeve 3 has a wall thickness W of 1 millimetres.

Figure 4 shows a filter part 1' similar to that of Figures 1 to 3, wherein like references depict like features. The filter part 1' according to this embodiment differs from that of Figures 1 to 3 in that a plurality of channels 22 are described along the outer surface of the core 2'. The channels 22 define, together with the internal surface of the sleeve 3, further pathways 23 along the length of the core 2'.

Figures 5 to 7 show an apparatus 10 for manufacturing filter parts 1, 1' according to Figures 1 to 4. As illustrated in Figure 5, a length of tow 4 is fed through a separator 5, which separates the tow 4 into two strips 4a, 4b, which are then fed over a guide 6 and into a sleeve former 7. Simultaneously, a core forming apparatus 8 forms an aerosol permeable core extrusion 80, which is fed through the guide 6 along a conveying path and introduced between the strips 4a, 4b as they pass over the guide 6 and into the sleeve former 7. The sleeve former 7 brings the strips 4a, 4b and core extrusion 80 together and joins the strips 4a, 4b together around the core extrusion 80 to form a filter rod 9.

In this embodiment, the tow 4 is formed of poly lactic acid (PLA) fibres aligned longitudinally along its length. The tow separator 5 includes a pair of opposed, counter-rotating separation rollers 5a, 5b configured, in use, to rotate in the conveying direction of the apparatus 10 at a speed R1. The separation rollers 5a, 5b have cooperating cutters or blades (not shown), which slit the tow 4 as it passes therebetween to create the strips 4a, 4b.

The guide 6 is also downstream of the tow separator 5 and includes a pair of opposed, spaced part-conical and tubular guide members 61a, 61b. An upper guide member 61a lies above the conveying path of the core extrusion 80 and a lower guide member 61b lies below the conveying path. Together, the guide members 61a, 61b partially surround the conveying path, with a vertical gap between them. Each of the guide members 61a, 61b tapers inwardly toward the sleeve former 7. The downstream ends of the guide members 61a, 61b are spaced from the sleeve former 7. The apparatus 10 in this embodiment also includes plasticizer sprayers 40 that apply a plasticizer to the strips 4a, 4b as they pass between the guide members 61a, 61b and the sleeve former 7.

The sleeve former 7 has a first, conical segment or forming funnel 71 and a second, tubular element 72 downstream of the conical segment 71. The conical segment 71 tapers inwardly along a conveying direction to the diameter of the tubular element 72. The sleeve former 7 is heated in this embodiment, such that the strips 4a, 4b of tow 4 are bonded together by both heat and compression as they are conveyed, together with the core extrusion 80, through the sleeve former 7. The apparatus 10 also includes a drawing mechanism (not shown), which provides a drawing force F to draw the completed filter rod 9 through and out of the tubular element 72 of the sleeve former 7. The apparatus 10 may also include an integral cutting station (not shown) downstream of the sleeve former 7 to cut the filter rod 9 into filter parts 1, 1'. Alternatively, the filter rod 9 may be fed into another apparatus for further processing.

The core forming apparatus 8 includes an extruder 81 with a hopper 81a for feeding raw material, a poly lactic acid (PLA) resin in this embodiment, to the extruder 81. The extruder 81 extrudes core material through a core die 82 and the core material is drawn therefrom through a cooling unit 83 using a core drawing mechanism 84. Downstream of the core drawing mechanism 84, the extruded core 80 is fed to the conveying path by alignment rollers 85a, 85b.

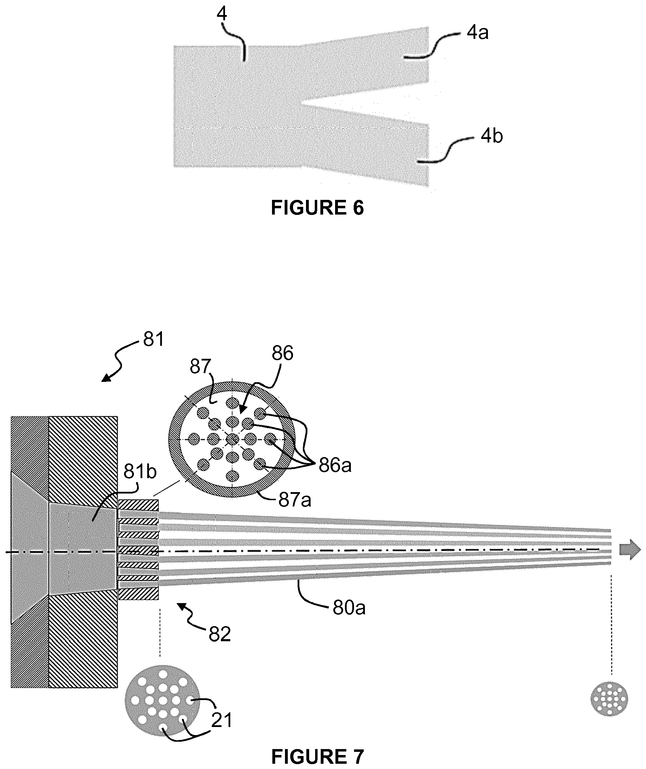

As shown more clearly in Figure 7, the downstream end of the extruder 81 includes a flow channel 81b leading to the core die 82. The core die 82 has a male part 86 and a female part 87 described by an outer wall 87a that defines the outer surface of the extrusion. The male part 86 is supported within the female part 87 by support elements (not shown) and has a plurality of core members 86a each having a circular cross-section for creating the pathways within the extrusion. The circular core members 86a together define a star pattern so as to form the pathways 21 along the core extrusion 80. The core die 82 is attached to the outlet of the core extruder 81 for receiving molten material therefrom. Optionally, the male part 86 may rotate within the female part 87 such that the core members 86a create helical or helicoidal pathways within the extrusion. The helical angle of the pathways may be controlled by the speed of rotation of the male part 86 relative to the drawing speed of the extrusion.

Downstream of the core die 82 is the cooling unit 83 which includes a tank 83a having a cooling medium therein, water in this embodiment. Extruded material is drawn by the drawing mechanism 84 from the extruder 81 into the tank 73a and through a final die 83b, which is below the surface of the water. The final die 83b is tubular with an internal diameter which is substantially the same as the diameter of the extruded core 80 and substantially smaller than the diameter of the female part 87 of the core die 82. As such, the extruded material forms a conical extrusion 80a as it passes from the core die 82 to the inlet of the cooling tank 83a.

The core forming apparatus 8 also includes a drying ring 88 downstream of the cooling tank 83a, which removes any remaining water on the surface of the extruded core 80. The drawing mechanism 84 is downstream of the drying ring 88 and includes a pair of opposed, counter-rotating pulling rollers 84a, 84b arranged to receive the extruded core 80 after it has passed through the cooling unit 83 and drying ring 88. The pulling rollers 84a, 84b receive the extruded core 80 therebetween, draw it through the cooling unit 83 and convey it to the conveying path via the alignment rollers 85a, 85b.

A first alignment roller 85a is external of the conveying path, while a second alignment roller 85b is within the conveying path, between the guide members 61a, 61b. The extruded core 80 is fed from the core forming apparatus 8 to the conveying path between the tow separator 5 and the guide 6 via the alignment rollers 85a, 85b. The extruded core 80 then enters the forming funnel 71 of the sleeve former 7 between the strips 4a, 4b, downstream of the tow separator 5. As illustrated in Figure 5, the axes of rotation of the alignment rollers 85a, 85b lie at an angle relative to the separation rollers 5a, 5b to enable transverse feeding of the core extrusion 80 through the vertical gap between the strips 4a, 4b. In this embodiment, the alignment rollers 85a, 85b are non-driven.

In use, a length of tow 4 is fed into the tow separator 5, where it passes between the rollers 5a, 5b and is split into the two strips 4a, 4b. The strips 4a, 4b are separated from the conveying path, with a first strip 4a passing over the upper guide member 61a and a second strip 4b passing over the lower guide member 61b. The strips 4a, 4b expand and conform to the profile of the respective guide member 61a, 61b as they are passed thereover. The guide members 61a, 61b create tension in the strips 4a, 4b and guide them toward the sleeve former 7. The guide members 61a, 61b deform and stretch the strips 4a, 4b into part-conical, tubular segments that partially surround the conveying path of the core extrusion 80. The plasticizer sprayers 40 apply a plasticizer to the so-formed strips 4a, 4b before they enter the sleeve former 7.

Simultaneously, raw material for forming the core extrusion 80 is fed from the hopper 81a through the extruder 81. Extruded core material 80a is drawn through the cooling unit 83 by the drawing mechanism 84, which cools and solidifies it into the core extrusion 80. The core extrusion 80 is also drawn through the final die 83b, which ensures that its diameter is correct. The core extrusion 80 is drawn by the pulling rollers 84a, 84b of the drawing mechanism 84 and fed to the sleeve former 7 via the alignment rollers 85a, 85b.

The longitudinal edge regions of the strips 4a, 4b overlap as they enter the sleeve former 7. As such, the overlapping regions are bonded together, using heat and compression, as the strips 4a, 4b pass through the sleeve former 7 such that they describe a sleeve surrounding the core extrusion 80 to form a length of filter rod 9. The application of a plasticizer not only facilitates the bonding of the strips 4a, 4b, but it also causes the core extrusion 80 to adhere to the strips 4a, 4b as they come into contact with them. The drawing mechanism (not shown) applies a force F to draw the finished filter rod 9 through and out of end of the tubular element 72 for processing or cutting into a plurality of filter parts 1, 1', or both processing and cutting into a plurality of filter parts. As the strips 4a, 4b are formed from the same tow 4, the sleeve 3 of an aerosol permeation element 1, 1' made using this apparatus 10 is formed from the same material. This reduces the likelihood of deformation in the finished filter element 1, 1'.

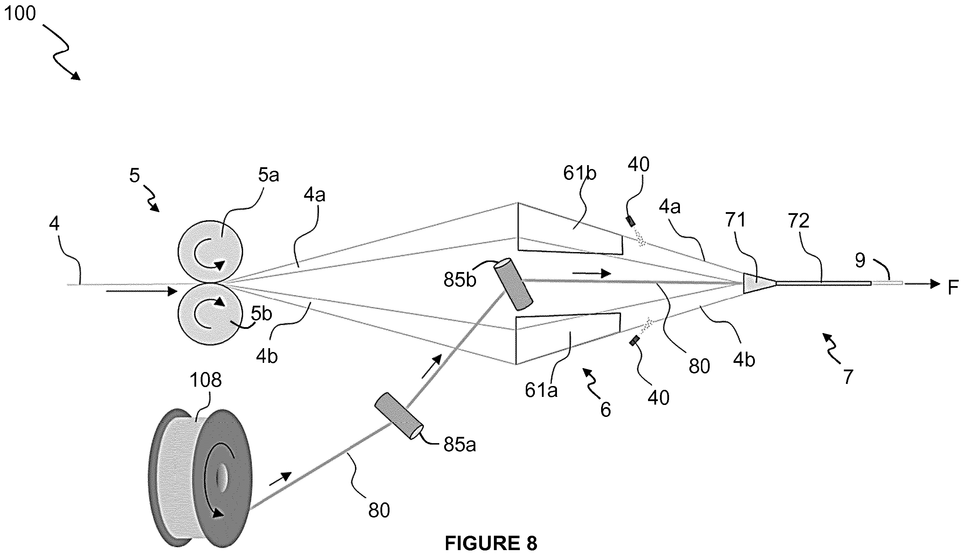

Turning now to Figure 8, there is shown an alternative apparatus 100 for manufacturing aerosol permeation elements 1, 1' according to Figures 1 to 4. The apparatus 100 according to this embodiment is similar to that of Figure 5, wherein like references depict like features that will not be described further herein. The apparatus 100 according to this embodiment differs from that of Figure 5 in that the core extrusion 80 is supplied from a pre-formed roll 108 instead of being manufactured in parallel.

As such, in this embodiment, the core forming apparatus 8 is completely separate from the aerosol permeation element manufacturing apparatus 100. This arrangement may be advantageous in some circumstances. For example, where multiple shorter runs of different filter rods 9 (for example, having cores 2 or sleeves 3 with different characteristics, or both cores and sleeves with different characteristics) are required, these can be manufactured by simply replacing the roll 108.

It will be appreciated by those skilled in the art that the parameters of the filter part 1, 1' may be altered by changing one or more processing parameters. For example, the thickness of the sleeve 3 may be increased or decreased by modifying the extent to which the strips 4a, 4b are stretched, for example by changing the difference between the speed R1 of the separation rollers 4a, 4b and the rate at which the filter rod 9 is drawn. Moreover, the size and density of the pathways 21, 23 in each of the filter parts 1, 1' may be selected to provide the appropriate resistance to draw for the filter part 1. This is preferably between 0.5 millimetres, water gauge (mmWG) and 2 millimetres, water gauge mmWG per millimetre of axial length of the filter part 1.

As such, the invention provides a versatile means of producing aerosol permeation elements 1 whose characteristics can be varied across a wide range.

It will be appreciated by those skilled in the art that several variations to the aforementioned embodiments are envisaged without departing from the scope of the invention. For example, the number of strips 4a, 4b used to form the sleeve 3 may be more than two in number. The strip or strips 4a, 4b used to form the sleeve may undergo further intermediate processing, for example chemical processing, to alter their properties. Moreover, while the strips 4a, 4b are described as being bonded together using heat and pressure, this need not be the case. They may be bonded together using an adhesive. Similarly, the strips 4a, 4b need not include a plasticizer applied thereto. Other variations are also envisaged and would be appreciated by those skilled in the art.

It will also be appreciated by those skilled in the art that any number of combinations of the aforementioned features or those shown in the appended drawings provide clear advantages over the prior art and are therefore within the scope of the invention described herein.

## Claims

1. An aerosol permeation element (1) for use in an aerosol generating article, the aerosol permeation element (1) comprising an aerosol permeable core extrusion (2) surrounded by a sleeve (3) comprising predominantly linear, axially oriented fibres; wherein the sleeve (3) comprises two or more longitudinal segments which are bonded together along longitudinal edges of the segments.

2. Aerosol permeation element (1) according to claim 1, wherein the core extrusion comprises a foamed polymeric extrusion with one or more pathways (21, 23) described therealong.

3. Aerosol permeation element (1) according to claim 2, wherein at least one of the pathways (21) is described within the core extrusion and at least one of the pathways (23) is described by a channel on an outer surface thereof which cooperates with the sleeve (3).

4. Aerosol permeation element (1) according to any preceding claim, wherein the sleeve (3) comprises two or more longitudinal segments formed from the same tow (4) and the tow material of the longitudinal segments is bonded together at least along their longitudinal edges to form an integral sleeve (3).

5. Aerosol permeation element (1) according to any preceding claim, wherein the core extrusion comprises a poly lactic acid, acetate or cellulose material.

6. Aerosol permeation element (1) according to any preceding claim, wherein the sleeve (3) comprises cellulose acetate or poly lactic acid fibres.

7. Aerosol permeation element (1) according to any preceding claim, wherein the sleeve (3) comprises a wall thickness of between 0.5 millimetres and 3 millimetres.

8. Aerosol permeation element (1) according to any preceding claim, wherein the core extrusion comprises a diameter of between 2 millimetres and 8 millimetres.

9. An aerosol generating article comprising an aerosol permeation element (1) according to any preceding claim.

10. A method of manufacturing an aerosol permeation element (1) for use in an aerosol generating article, the method comprising:
separating a tow (4) into two or more strips (4a, 4b) which are formed into segments surrounding a conveying path;
introducing an aerosol permeable core extrusion (2) between the segments; and
bonding the segments together along longitudinal edges thereof to form a sleeve (3) surrounding the core (2) extrusion.

11. Method according to claim 10, wherein the core extrusion is introduced between the segments as a foamed polymeric extrusion with one or more pathways (21, 23) described therealong.

12. Method according to claim 10 or claim 11 comprising extruding a core material through a die (82) to form the core extrusion and supplying the core extrusion from the die (82) for introduction between the segments.

13. Method according to claim 12 comprising passing the extruded core material through a cooling bath prior to introducing the core extrusion between the segments

14. Method according to claim 10 or claim 11 comprising supplying the core extrusion from a pre-extruded roll.

## Patentansprüche

1. Aerosolpermeationselement (1) zum Gebrauch in einem aerosolerzeugenden Artikel, wobei das Aerosolpermeationselement (1) eine aerosolpermeable Kernextrusion (2) aufweist, die von einer Hülle (3) umgeben ist, die vorwiegend lineare, axial ausgerichtete Fasern umfasst; wobei die Hülle (3) zwei oder mehr Längssegmente aufweist, die entlang der Längskanten der Segmente miteinander verbunden sind.

2. Aerosolpermeationselement (1) nach Anspruch 1, wobei die Kernextrusion eine geschäumte Polymerextrusion mit einem oder mehreren daran entlang beschriebenen Wegen (21, 23) aufweist.

3. Aerosolpermeationselement (1) nach Anspruch 2, wobei wenigstens einer der Wege (21) innerhalb der Kernextrusion beschrieben ist und wenigstens einer der Wege (23) durch einen Kanal auf einer Außenfläche davon beschrieben ist, der mit der Hülle (3) zusammenwirkt.

4. Aerosolpermeationselement (1) nach einem beliebigen vorhergehenden Anspruch, wobei die Hülle (3) zwei oder mehr Längssegmente aufweist, die aus demselben Tow (4) gebildet sind, und das Towmaterial der Längssegmente wenigstens entlang ihrer Längskanten miteinander verbunden ist, um eine einstückige Hülle (3) zu bilden.

5. Aerosolpermeationselement (1) nach einem beliebigen vorhergehenden Anspruch, wobei die Kernextrusion ein Polymilchsäure-, Acetat- oder Cellulosematerial umfasst.

6. Aerosolpermeationselement (1) nach einem beliebigen vorhergehenden Anspruch, wobei die Hülle (3) Celluloseacetat- oder Polymilchsäurefasern umfasst.

7. Aerosolpermeationselement (1) nach einem beliebigen vorhergehenden Anspruch, wobei die Hülle (3) eine Wandstärke zwischen 0,5 Millimeter und 3 Millimeter aufweist.

8. Aerosolpermeationselement (1) nach einem beliebigen vorhergehenden Anspruch, wobei die Kernextrusion einen Durchmesser zwischen 2 Millimeter und 8 Millimeter aufweist.

9. Aerosolerzeugender Artikel, umfassend ein Aerosolpermeationselement (1) nach einem beliebigen vorhergehenden Anspruch.

10. Verfahren zum Herstellen eines Aerosolpermeationselements (1) zum Gebrauch in einem aerosolerzeugenden Artikel, das Verfahren umfassend:
Trennen eines Tow (4) in zwei oder mehr Streifen (4a, 4b), die in einen Förderweg umgebende Segmente gebildet werden;
Einbringen einer aerosolpermeablen Kernextrusion (2) zwischen die Segmente; und
Verbinden der Segmente entlang ihrer Längskanten zum Bilden einer die Kernextrusion (2) umgebenden Hülle (3).

11. Verfahren nach Anspruch 10, wobei die Kernextrusion zwischen den Segmenten als geschäumte Polymerextrusion mit einem oder mehreren daran entlang beschriebenen Wegen (21, 23) eingebracht wird.

12. Verfahren nach Anspruch 10 oder Anspruch 11 umfassend das Extrudieren eines Kernmaterials durch eine Düse (82) zum Bilden der Kernextrusion und Zuführen der Kernextrusion aus der Düse (82) zum Einbringen zwischen die Segmente.

13. Verfahren nach Anspruch 12, umfassend das Durchleiten des extrudierten Kernmaterials durch ein Kühlbad vor dem Einbringen der Kernextrusion zwischen die Segmente.

14. Verfahren nach Anspruch 10 oder Anspruch 11, umfassend das Zuführen der Kernextrusion von einer vorextrudierten Rolle.

## Revendications

1. Élément de perméation d'aérosol (1) destiné à être utilisé dans un article de génération d'aérosol, l'élément de perméation d'aérosol (1) comprenant une extrusion de noyau perméable à l'aérosol (2) entourée par un manchon (3) comprenant des fibres orientées axialement, principalement linéaires ; dans lequel le manchon (3) comprend deux segments longitudinaux ou plus qui sont liés ensemble le long des bords longitudinaux des segments.

2. Élément de perméation d'aérosol (1) selon la revendication 1, dans lequel l'extrusion de noyau comprend une extrusion polymère expansée avec une ou plusieurs passages (21, 23) décrits le long de celle-ci.

3. Élément de perméation d'aérosol (1) selon la revendication 2, dans lequel au moins l'un des passages (21) est décrit au sein de l'extrusion de noyau et au moins l'un des passages (23) est décrit par un canal sur une surface extérieure de celui-ci qui coopère avec le manchon (3).

4. Élément de perméation d'aérosol (1) selon l'une quelconque des revendications précédentes, dans lequel le manchon (3) comprend deux segments longitudinaux ou plus formés à partir de la même étoupe (4) et la matière d'étoupe des segments longitudinaux est liée au moins le long de leurs bords longitudinaux pour former un manchon intégral (3).

5. Élément de perméation d'aérosol (1) selon l'une quelconque des revendications précédentes, dans lequel l'extrusion de noyau comprend un acide polylactique, un acétate ou une matière cellulosique.

6. Élément de perméation d'aérosol (1) selon l'une quelconque des revendications précédentes, dans lequel le manchon (3) comprend des fibres d'acétate de cellulose ou d'acide polylactique.

7. Élément de perméation d'aérosol (1) selon l'une quelconque des revendications précédentes, dans lequel le manchon (3) comprend une épaisseur de paroi d'entre 0,5 millimètre et 3 millimètres.

8. Élément de perméation d'aérosol (1) selon l'une quelconque des revendications précédentes, dans lequel l'extrusion de noyau comprend un diamètre d'entre 2 millimètres et 8 millimètres.

9. Article de génération d'aérosol comprenant un élément de perméation d'aérosol (1) selon l'une quelconque revendication précédente.

10. Procédé de fabrication d'un élément de perméation d'aérosol (1) pour une utilisation dans un article de génération d'aérosol, le procédé comprenant :
la séparation d'une étoupe (4) en deux bandes (4a, 4b) ou plus qui sont formées en segments entourant une voie de transport ;
l'introduction d'une extrusion de noyau perméable à l'aérosol (2) entre les segments ; et
la liaison des segments entre eux le long de leurs bords longitudinaux afin de former un manchon (3) entourant l'extrusion de noyau (2).

11. Procédé selon la revendication 10, dans lequel l'extrusion de noyau est introduite entre les segments sous la forme d'une extrusion polymère expansée avec un ou plusieurs passages (21, 23) décrits le long de celle-ci.

12. Procédé selon la revendication 10 ou la revendication 11, comprenant l'extrusion d'une matière de noyau à travers une filière (82) pour former l'extrusion de noyau et la fourniture de l'extrusion de noyau à partir de la filière (82) pour une introduction entre les segments.

13. Procédé selon la revendication 12, comprenant le passage de la matière de noyau extrudée à travers un bain de refroidissement avant l'introduction de l'extrusion de noyau entre les segments.

14. Procédé selon la revendication 10 ou la revendication 11, comprenant la fourniture de l'extrusion de noyau à partir d'un rouleau pré-extrudé.
